# EUROPEAN PATENT APPLICATION

(11) **EP 4 645 217 A1**
(43) Date of publication of application: **05.11.2025**
(21) Application number: 23910468.0
(22) Date of filing: 25.12.2023
(51) Int. Cl.: G06T 7/00, G06T 5/00

(54) **VEHICLE INSPECTION METHOD AND SYSTEM, AND STORAGE MEDIUM**

(30) Priority: 27.12.2022 CN 202211683207
(71) Applicant: NUCTECH COMPANY LIMITED, Beijing 100084 (CN); Nuctech (Beijing) Company Limited, Beijing 101500 (CN)
(72) Inventor: TU, Junjie, Beijing 100084 (CN); WANG, Yongming, Beijing 100084 (CN); NI, Xiulin, Beijing 100084 (CN); RAN, Zhansen, Beijing 100084 (CN); ZHENG, Dachuan, Beijing 100084 (CN); MENG, Luan, Beijing 100084 (CN)
(74) Representative: Gunzelmann, Rainer
(86) International application number: PCT/CN2023/141480
(87) International publication number: WO 2024/140542

(57) **Abstract**

The present disclosure relates to a vehicle inspection method, system and a storage medium. The vehicle inspection method for performing radiation inspection on a vehicle passing through an inspection passage by a radiation scanning device (30) includes: recognizing an external optical image of the vehicle that has entered the inspection passage to determine a type of the vehicle and a size of a radiation dose limited area of the vehicle; selecting a scanning strategy of the radiation scanning device (30) for the vehicle according to the type of the vehicle, and switching a working mode of the radiation scanning device (30) according to the size of the radiation dose limited area of the vehicle and a traveling position of the vehicle.

## Description

### CROSS-REFERENCE TO RELATED APPLICATIONS

The present application is based on and claims priority to China Patent Application No. 202211683207.4 filed on December 27, 2022, the disclosure of which is incorporated by reference herein in its entirety.

### TECHNICAL FIELD

The present disclosure relates to the field of radiation inspection, in particular to a vehicle inspection method, system and a storage medium.

### BACKGROUND

The container /vehicle rapid inspection system is required to realize the following functions: 1) when the bus and pedestrians pass through the scanning passage, the system does not emit X-rays; 2) when the truck passes through the scanning passage, in order to meet the limit of the single absorbed radiation dose of the driver in the radiation protection requirements, before the truck driver passes through a set position, the system emits X-rays at a lower dose or does not emit X-rays; and after the driver passes through a set position, the system emits X-rays to scan a complete cargo.

Based on the above-described requirements, in some related technologies, the container/vehicle rapid inspection system uses multiple sets of light curtains. During the traveling process of the vehicle, a side binary image is drawn by a set of light curtains; after a type of the vehicle recognition algorithm is called to process the side binary image so as to obtain the type of the vehicle (truck, bus or pedestrian) and the cab length data, the vehicle head position and the speed information are combined to provide a cab avoidance signal at the set position. In other related technologies, the depth data is acquired by using multiple area laser scanners, and the gray scale image of the vehicle side is drawn. After a type of the vehicle recognition algorithm is called to process the gray scale image of the vehicle side so as to obtain the type of the vehicle and the cab length data, the vehicle head position and the speed information are combined to provide a cab avoidance signal at the set position.

### SUMMARY

The inventors have found through studies that, the multiple sets of light curtains or the multiple area laser sensors in the related art occupy a large area, which involves a large amount of civil engineering and high cost, and the speed measurement accuracy has an impact on the cab length data, which might lead to the error of the avoidance opportunity. In addition, for some special type of the vehicles, the cab length data cannot be accurately obtained because of an air conditioner installed at the upper end of the cab or a low external reflectivity of the cab, which affects the determination of the avoidance opportunity.

In view of this, the embodiment of the present disclosure provides a vehicle inspection method, system and a storage medium, which may improve the accuracy of the avoidance opportunity of the inspection system for the radiation dose limited area of the vehicle.

In one aspect of the present disclosure, a vehicle inspection method for performing radiation inspection on a vehicle passing through an inspection passage by a radiation scanning device is provided. The method includes: recognizing an external optical image of the vehicle that has entered the inspection passage to determine a type of the vehicle and a size of a radiation dose limited area of the vehicle; selecting a scanning strategy of the radiation scanning device for the vehicle according to the type of the vehicle, and switching a working mode of the radiation scanning device according to the size of the radiation dose limited area of the vehicle and a traveling position of the vehicle.

In some embodiments, the vehicle inspection method further includes: capturing the vehicle that has entered the inspection passage by a vision device; performing image processing on the captured optical image to obtain an external optical image of the vehicle for image recognition.

In some embodiments, the step of performing image processing on the captured optical image includes: performing barrel distortion correction on the captured optical image.

In some embodiments, the step of performing image processing on the captured optical image includes: stitching a plurality of optical images captured when the vehicle is at different traveling positions.

In some embodiments, the vehicle inspection method further includes: obtaining the traveling position of the vehicle that has entered the inspection passage in real time by a vehicle position obtaining device.

In some embodiments, the vehicle inspection method further includes: causing the vision device to capture the vehicle when it is determined that the vehicle travels to a preset optical image obtaining position.

In some embodiments, the radiation dose limited area of the vehicle includes: at least one of a truck head and a cab window of the truck head.

In some embodiments, the size of the radiation dose limited area of the vehicle includes a length L_{T} of a cab window of a truck head in an extension direction of the inspection passage; the step of switching a working mode of the radiation scanning device according to the size of the radiation dose limited area of the vehicle and a traveling position of the vehicle includes: determining a distance L_{B} from a beam position B of the radiation scanning device to a reference point 0 according to the reference point 0 preset on the inspection passage; setting a beam emission control position point P_{E} of the inspection passage so that a distance L_{E} from the beam emission control position point P_{E} to the reference point 0 satisfies: L_{E}≥ L_{B}-(L_{T}+Lₚᵣ), where Lₚᵣ is a protection avoidance length, and Lₚᵣ satisfies: Lₚᵣ≥0; after it is determined that the vehicle travels to the beam emission control position point P_{E}, causing the radiation scanning device to switch a working mode so that a radiation source of the radiation scanning device emits a radiation beam according to the switched working mode.

In some embodiments, the size of the radiation dose limited area of the vehicle further includes a length L_{H} of the truck head in the extension direction of the inspection passage; the step of switching a working mode of the radiation scanning device according to the size of the radiation dose limited area of the vehicle and a traveling position of the vehicle further includes: judging whether a distance L_{V} from the traveling position of the vehicle to the reference point O satisfies: L_{V}≤L_{B}-L_{H} when it is determined that the vehicle travels to the beam emission control position point P_{E}; if L_{V}≤L_{B}-L_{H} is satisfied, causing the radiation scanning device to switch a working mode, so that the radiation source of the radiation scanning device emits a radiation beam according to the switched working mode.

In some embodiments, the size of the radiation dose limited area of the vehicle includes a length L_{T} of a cab window of a truck head in an extension direction of the inspection passage; the step of switching a working mode of the radiation scanning device according to the size of the radiation dose limited area of the vehicle and a traveling position of the vehicle includes: recording a current speed V of the vehicle when it is determined that the vehicle travels to a beam position B of the radiation scanning device; setting an beam emission control time point T_{E} of the inspection passage, so that the beam emission control time point T_{E} satisfies: T_{E}≥T_{B}+(L_{T}+Lₚᵣ)/V, where T_{B} is the time when the vehicle travels to the beam position B, Lₚᵣ is a protection avoidance length, and Lₚᵣ satisfies: Lₚᵣ≥0; after it is determined that the vehicle travels to the beam emission control time point T_{E} along the inspection passage, causing the radiation scanning device to switch a working mode, so that a radiation source of the radiation scanning device emits a radiation beam according to the switched working mode.

In some embodiments, the size of the radiation dose limited area of the vehicle further includes a length L_{H} of the truck head in the extension direction of the inspection passage; the step of switching a working mode of the radiation scanning device according to the size of the radiation dose limited area of the vehicle and the traveling position of the vehicle further includes: after determining that the vehicle travels to the beam emission control time point T_{E} along the inspection passage, judging whether the distance L_{V} from the traveling position of the vehicle to the reference point 0 satisfies: L_{V}≤L_{B}-L_{H}; if L_{V}≤L_{B}-L_{H} is satisfied, causing the radiation scanning device to switch a working mode, so that a radiation source of the radiation scanning device emits a radiation beam according to the switched working mode.

In one aspect of the present disclosure, a vehicle inspection system for performing radiation inspection on a vehicle passing through an inspection passage is provided. The system includes: a vision device configured to obtain an external optical image of the vehicle that has entered the inspection passage; a radiation scanning device having a radiation source and a detector, configured to scan a vehicle passing through an inspection area in the inspection passage through radiation emitted by the radiation source and obtain an inspection result through a detection signal received by the detector; a control device signally connected with both the vision device and the radiation scanning device, and configured to perform the vehicle inspection method described previously.

In some embodiments, the vision device includes: a first camera located in the inspection passage and configured to capture a lateral optical image of the vehicle entering the inspection passage.

In some embodiments, the vision device further includes: a second camera arranged on the radiation inspection device and configured to capture an overhead optical image of the vehicle entering the inspection passage.

In some embodiments, the first camera or the second camera includes an area scan camera.

In some embodiments, the vehicle inspection system further includes: a vehicle position obtaining device signally connected with the control device and configured to obtain a traveling position of the vehicle that has entered the inspection passage.

In some embodiments, the vehicle position obtaining device includes: an area laser sensor, a light curtain or a photoelectric sensor.

In some embodiments, the radiation inspection device includes a single radiation source that is capable of emitting a single radiation beam or a plurality of radiation beams, or a plurality of radiation sources that is capable of emitting a plurality of radiation beams respectively.

In one aspect of the present disclosure, a computer-readable storage medium is provided. The computer-readable storage medium has computer program instructions stored thereon that, when executed by a processor, realize the steps of the vehicle inspection method described previously.

Therefore, according to the embodiment of the present disclosure, the external optical image of the vehicle that has entered the inspection passage is recognized by the image recognition algorithm, the type of the vehicle and the size of the radiation dose limited area of the vehicle are determined according to a recognition result, an appropriate scanning strategy is determined according to the type of the vehicle, and the working mode of the radiation scanning device is switched according to the vehicle traveling position and the size of the radiation dose limited area. Compared with the recognition of the vehicle by the light curtain or the area laser sensor, in this embodiment, the external optical image of the vehicle is recognized so as to avoid that the accuracy of determining the relevant dimensions of the vehicle is affected by reasons such that the speed measurement accuracy is insufficient and the vehicle head cannot be segmented or recognized, thereby improving the accuracy of the avoidance opportunity of the inspection system for the radiation dose limited area of the vehicle.

### BRIEF DESCRIPTION OF THE DRAWINGS

The accompanying drawings which constitute part of this specification, describe the embodiments of the present disclosure, and together with this specification, serve to explain the principles of the present disclosure.

The present disclosure may be more explicitly understood from the following detailed description with reference to the accompanying drawings, in which:
Fig. 1 is a schematic flow chart of some embodiments of a vehicle inspection method according to the present disclosure;
Fig. 2 is a schematic structural view of some embodiments of a vehicle inspection system according to the present disclosure;
Fig. 3 is a schematic view of an application scenario of an embodiment of a vehicle inspection system according to the present disclosure;
Fig. 4 is a schematic view of performing radiation scanning on the vehicle passing through a scanning passage by a radiation scanning device in an embodiment of the vehicle inspection system according to the present disclosure;
Figs. 5A and 5B are schematic views of optical images captured by the vision device before barrel distortion correction and after barrel distortion correction in an embodiment of the vehicle inspection system according to the present disclosure respectively;
Figs. 6A and 6B are optical images captured by the vision device when the vehicle is at different traveling positions in an embodiment of the vehicle inspection system according to the present disclosure respectively;
Fig. 6C is an optical image obtained by image stitching in Figs. 6A and 6B;
Figs. 7 to 9 are schematic views of control principles of some embodiments of the vehicle inspection method according to the present disclosure respectively.

It should be understood that, the dimensions of various parts shown in the accompanying drawings are not drawn according to actual proportional relations. In addition, the same or similar components are denoted by the same or similar reference signs.

### DETAILED DESCRIPTION

Various exemplary embodiments of the present disclosure will now be described in detail with reference to the accompanying drawings. The description of the exemplary embodiments is merely illustrative but in no way intended as limiting the present disclosure and its application or use. The present disclosure may be implemented in many different forms, which are not limited to the embodiments described herein. These embodiments are provided to make the present disclosure thorough and complete, and fully convey the scope of the present disclosure to those skilled in the art. It should be noted that: the relative arrangements of members and steps, the material composition, the numerical expressions, and the numerical values elaborated in these embodiments, should be construed as merely illustrative rather than restrictive unless specifically stated otherwise.

The use of the words "first", "second" and the like in the present disclosure do not represent any sequence, quantity or significance, but are merely intended to distinguish different parts. A word such as "include", "have" or variants thereof means that the element before the word covers the element (s) listed after the word without excluding the possibility of also covering other elements. The words such as "up", "down", "left" and "right", are used only to represent a relative positional relationship, and the relative positional relationship may also be changed correspondingly when the absolute position of the described object changes.

In the present disclosure, when it is described that a particular device is located between the first device and the second device, there may be present or absent with an intermediate device between the particular device and the first device or the second device. When it is described that a particular device is connected to other devices, the particular device may be directly connected to said other devices without an intermediate device, and may also not be directly connected to said other devices but with an intermediate device.

All terms (including technical terms and scientific terms) used in the present disclosure have the same meanings as understood by those of ordinary skill in the art to which the present disclosure belongs, unless otherwise specifically defined. It should also be understood that, the terms defined in, for example, general dictionaries, should be construed as having meanings that are consistent with their meanings in the context of the relevant art, but not construed in an idealized or extremely formalized sense unless specifically thus defined here.

The techniques, methods, and devices known to those of ordinary skill in the relevant art might not be discussed in detail. However, the techniques, methods, and devices shall be considered as part of the specification where appropriate.

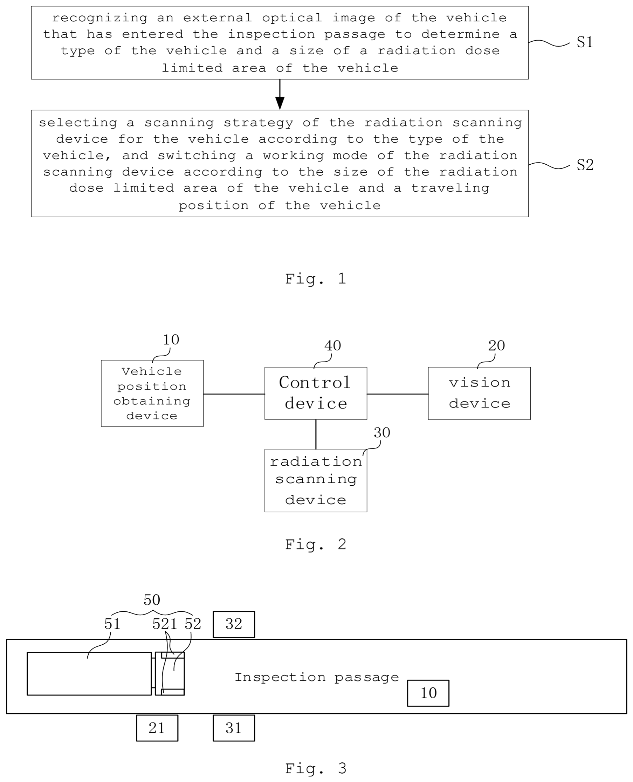

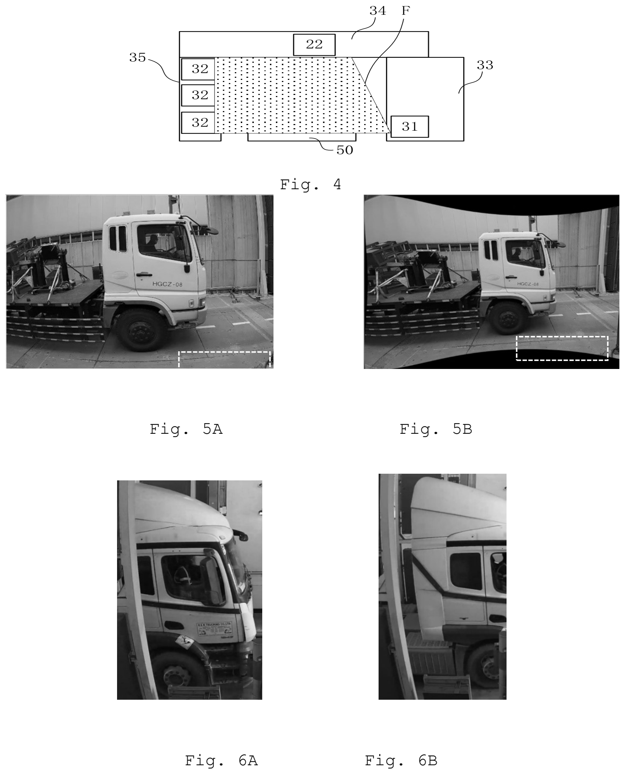

Fig. 1 is a schematic flow chart of some embodiments of a vehicle inspection method according to the present disclosure. Fig. 2 is a schematic structural view of some embodiments of a vehicle inspection system according to the present disclosure. Fig. 3 is a schematic view of an application scenario of an embodiment of a vehicle inspection system according to the present disclosure. Fig. 4 is a schematic view of performing radiation scanning on the vehicle passing through a scanning passage by a radiation scanning device in an embodiment of the vehicle inspection system according to the present disclosure.

Referring to Figs. 1 to 3, the embodiment of the present disclosure provides a vehicle inspection method for performing radiation inspection on a vehicle passing through an inspection passage by a radiation scanning device 30. The method includes steps S1 and S2.

In step S1, the external optical image of the vehicle that has entered the inspection passage is recognized to determine a type of the vehicle and a size of a radiation dose limited area of the vehicle.

In step S2, a scanning strategy of the radiation scanning device 30 for the vehicle is selected according to the type of the vehicle, and a working mode of the radiation scanning device 30 is switched according to the size of the radiation dose limited area of the vehicle and a traveling position of the vehicle.

The external optical image of the vehicle that has entered the inspection passage is recognized by an image recognition algorithm, the type of the vehicle and the size of the radiation dose limited area of the vehicle are determined according to a recognition result, an appropriate scanning strategy is determined according to the type of the vehicle, and a working mode of the radiation scanning device is switched according to the traveling position of the vehicle and the size of the radiation dose limited area.

Compared with the recognition of the vehicle by the light curtain or the area laser sensor, in this embodiment, the external optical image of the vehicle is recognized so as to avoid that the accuracy of determining the relevant dimensions of the vehicle is affected because the speed measurement accuracy is insufficient and the vehicle head cannot be segmented or recognized, thereby improving the accuracy of the avoidance opportunity of the inspection system for the radiation dose limited area of the vehicle. Moreover, by omitting the light curtain or the area laser sensor for recognizing the type of the vehicle and determining the relevant dimensions of the vehicle, it is possible to reduce the coverage area of the inspection system and reduce the amount of civil engineering and the cost.

Compared with the binary image obtained by the light curtain or the depth image obtained by the area laser sensor, the external optical image of the vehicle is an analog image obtained by the vision device, and its gray level and color change continuously. This optical image may visually reflect the external characteristics of the vehicle, and the features such as the shape, color and texture of different areas in the image can be obtain by processing and recognizing the image, so as to further recognize the concepts corresponding to different areas and obtain the size and position information of different areas.

In some embodiments, the vehicle may be driven by the driver to enter and pass through the inspection passage, so that the inspection may be realized at the same time when the vehicle passes quickly, and the driver and the like may be prevented from receiving radiation dose beyond their acceptable level. In other embodiments, the vehicle may also be driven through the inspection passage by other towing platforms or supporting platforms, and the driver may stay in the cab or leave the cab.

By way of image recognition, the type of the vehicle currently passing through the passage, such as a car, a bus, a van truck and a container truck may be determined, the non-vehicle type, such as bypassing pedestrians, may also be recognized, and the result indicative of ineffective recognition may also be output.

Different types of vehicles may match different scanning strategies of the radiation scanning device. The scanning strategies include but are not limited to: not scanning of the whole vehicle; low-dose scanning of the whole vehicle; high-dose scanning of the whole vehicle; not scanning of the vehicle head, and low-dose scanning of the vehicle body; not scanning of the vehicle head, and normal-dose scanning of the vehicle body; low-dose scanning of the vehicle head and normal-dose scanning of the vehicle body; and the like. For example, for a passenger car type of the vehicle such as a car or a bus, radiation scanning is not performed or only low-dose radiation scanning is used. For a truck type such as a van truck and a container truck, radiation scanning is not performed or only low-dose radiation scanning is used for the cab of the vehicle head, and the radiation scanning device performs radiation scanning according to a normal dose after avoiding the vehicle head or the cab.

In the present disclosure, the radiation dose limited area refers to the part of the vehicle that must not be scanned or requires low-dose scanning. Taking a truck as an example, the radiation dose limited area may include: at least one of a truck head and a cab window of the truck head. For example, the whole truck head serves as a radiation dose limited area. For another example, considering that there is no passenger seated at a posterior position of some truck heads, the range from a front edge of the truck head to a rear edge of the window serves as a radiation dose limited area.

In step S2, the switching of a working mode of the radiation scanning device 30 may include: switching a non-beam emission working mode and a beam emission working mode of the radiation source of the radiation inspection device, or switching a radiation source of the radiation inspection device between a low-dose emission working mode and a normal-dose working mode.

The external optical image of the vehicle may be obtained when the vehicle enters the inspection passage or before the vehicle enters the inspection passage. The external optical image of the vehicle may be captured by the vision device 20. The vision device 20 may include one camera or more cameras, for example, an area scan camera. The area scan camera captures the optical image through pixel matrix. Compared with other types of cameras, the area scan camera may obtain two-dimensional image information, so as to obtain more intuitive images, which is conducive to reducing the number of capturing.

Accordingly, in some embodiments, the vehicle inspection method may further include: capturing the vehicle that has entered the inspection passage by the vision device 20; and performing image processing on the captured optical image to obtain an external optical image of the vehicle for image recognition.

In order to improve the accuracy of image recognition, image processing may be performed on the optical image captured by the vision device. Existing optical image processing algorithms may be used for image processing. For example, in order to obtain the cab information of the vehicle in a wider range, the vision device may use a camera lens with a small focal length, so that the optical image thus captured is prone to serious barrel distortion. Accordingly, barrel distortion correction may be performed for the captured optical image by the existing correction algorithm, so as to accurately obtain the relevant dimensions of the vehicle in the optical image. For example, Figs. 5A and 5B show the optical image without barrel distortion correction and the optical image with barrel distortion correction respectively, and as may be seen from the position shown by the dashed border in Figs. 5A and 5B, the edge line of the floor slate has been corrected from a curve to a straight line.

Considering that the camera might not be able to display a complete radiation dose-limited area (for example, the cab) by a photo or a frame of data, the step of performing image processing on the captured optical image at this time may include: stitching a plurality of optical images captured when the vehicle is at different traveling positions.

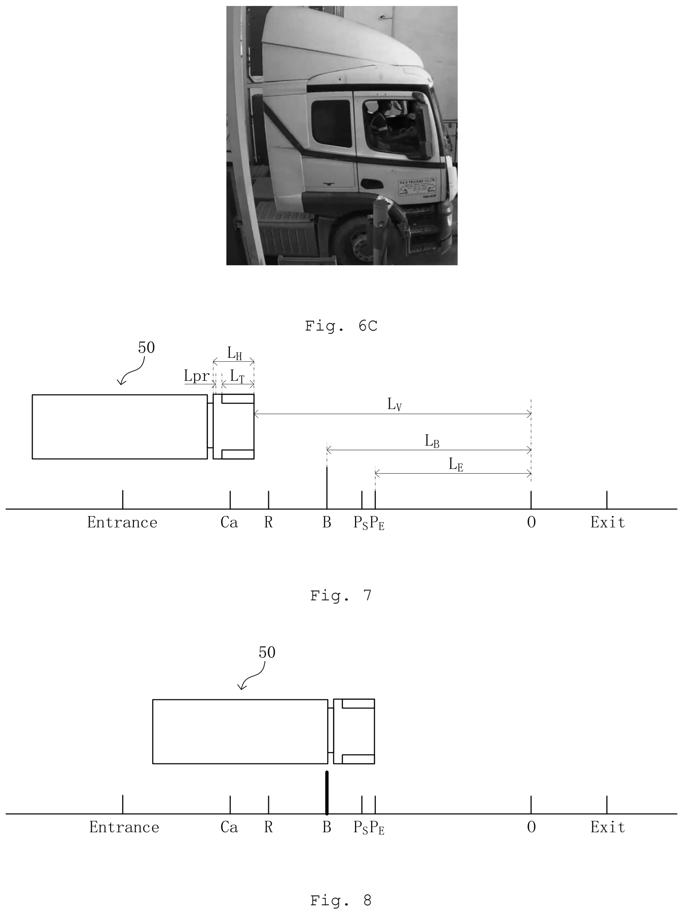

The vision device may continuously capture the vehicle, and at this time, the vision device and the vehicle move relative to each other, so as to capture a plurality of optical images of the vehicle at different traveling positions. Since there are the same characteristic points in these optical images, a plurality of optical images may be stitched into an optical image containing a complete radiation dose limited area according to these characteristic points, so as to accurately obtain the size of this area. For example, Figs. 6A and 6B show two optical images captured when the vehicle travels at different positions respectively, and Fig. 6C shows an optical image that may reflect the whole vehicle head after stitching these two optical images.

Referring to Fig. 2, in some embodiments, the vehicle inspection method may further include: obtaining a traveling position of the vehicle that has entered the inspection passage in real time by the vehicle position obtaining device 10. In some embodiments, the vehicle position obtaining device 10 may include an area laser sensor, a single-line area laser sensor or a multi-line area laser sensor. The area laser sensor may also be configured to sense a traveling speed of the vehicle. In other embodiments, the vehicle position obtaining device 10 may also include a light curtain or a photoelectric sensor.

In order to obtain the external optical image of the vehicle in time before scanning and inspecting the vehicle, and obtain the relevant dimensions capable of recognizing the type of the vehicle and the radiation dose limited area, in some embodiments, the vehicle inspection method further includes: causing the vision device 20 to capture the vehicle when it is determined that the vehicle travels to a preset optical image obtaining position.

Figs. 7 to 9 are schematic views of control principles of some embodiments of the vehicle inspection method according to the present disclosure respectively. Referring to Fig. 7, in some embodiments, the size of the radiation dose limited area of the vehicle includes a length L_{T} of the cab window 521 of the truck head 52 in the extension direction of the inspection passage. Accordingly, the step of switching the working mode of the radiation scanning device 30 according to the size of the radiation dose limited area of the vehicle and the traveling position of the vehicle in step S2 may include:

The distance L_{B} from the beam position B of the radiation scanning device 30 to a reference point 0 is determined according to the reference point O preset on the inspection passage (which may be a set position of the area laser sensor);

The beam emission control position point P_{E} of the inspection passage is set so that the distance L_{E} from the beam emission control position point P_{E} to the reference point 0 satisfies that: L_{E}≥ L_{B}-(L_{T}+Lₚᵣ), where Lₚᵣ is a protection avoidance length, and Lₚᵣ satisfies: Lₚᵣ≥0;

After it is determined that the vehicle travels to the beam emission control position point P_{E}, the radiation scanning device 30 is caused to switch a working mode, so that the radiation source 31 of the radiation scanning device 30 emits a radiation beam according to the switched working mode.

L_{E}≥L_{B}-(L_{T}+Lₚᵣ) means that if the front edge of the vehicle head reaches the beam emission control position point P_{E}, the distance between the rear edge of the cab window of the vehicle head and the beam position B is greater than or equal to Lₚᵣ, and the radiation source emits a radiation beam according to the switched working mode at this moment or after this moment, so that the radiation beam with normal dose may maintain a certain safe distance from the cab after switching, and avoid that a person in the cab receives radiation exceeding a safe dose. It may be understood that, the protection avoidance length Lₚᵣ is an additionally provided value, which may be set according to a safety distance actually required.

In order to effectively ensure the safety of the driver, in some embodiments, the size of the radiation dose limited area of the vehicle also includes the length L_{H} of the truck head in the extension direction of the inspection passage. Accordingly, the step of switching the working mode of the radiation scanning device 30 according to the size of the radiation dose limited area of the vehicle and the traveling position of the vehicle in step S2 may further include:

When it is determined that the vehicle travels to the beam emission control position point P_{E}, it is judged whether the distance L_{V} from the traveling position of the vehicle to the reference point 0 satisfies: L_{V}≤L_{B}-L_{H};

If L_{V}≤L_{B}-L_{H} is satisfied, the radiation scanning device 30 is caused to switch a working mode, so that the radiation source 31 of the radiation scanning device 30 emits a radiation beam according to the switched working mode.

In addition to using this method of controlling according to an arrival position of the vehicle, a method of controlling according to the time may also be used. In other embodiments, the size of the radiation dose limited area of the vehicle includes the length L_{T} of the cab window of the truck head in the extension direction of the inspection passage. The step of switching the working mode of the radiation scanning device 30 according to the size of the radiation dose limited area of the vehicle and the traveling position of the vehicle in step S2 may include:

The current speed V of the vehicle is recorded when it is determined that the vehicle travels to the beam position B of the radiation scanning device 30;

The beam emission control time point T_{E} of the inspection passage is set so that the beam emission control time point T_{E} satisfies: T_{E}≥T_{B}-(L_{T}+Lₚᵣ)/V, where T_{B} is the time when the vehicle travels to the beam position B, Lₚᵣ is the protection avoidance length, and Lₚᵣ satisfies: Lₚᵣ≥0;

After it is determined that the vehicle travels to the beam emission control time point T_{E} along the inspection passage, the radiation scanning device 30 is caused to switch a working mode, so that the radiation source 31 of the radiation scanning device 30 emits a radiation beam according to the switched working mode.

T_{E}≥T_{B}+(L_{T}+Lₚᵣ)/V means that the front edge of the vehicle head continues to travel to the beam emission control time point T_{E} according to the speed V when the front edge of the vehicle head reaches the beam position B after the front edge of the vehicle head reaches the beam position B at the time T_{B}, the distance between the rear edge of the cab window of the vehicle head and the beam position B is greater than or equal to Lₚᵣ. At this moment or after this moment, the radiation source emits a radiation beam according to the switched working mode, so that the switched normal dose beam may maintain a certain safe distance from the cab, so as to avoid that a person in the cab receives radiation exceeding a safe dose.

In order to effectively ensure the safety of the driver, in some embodiments, the size of the radiation dose limited area of the vehicle also includes the length L_{H} of the truck head in the extension direction of the inspection passage. Accordingly, the step of switching the working mode of the radiation scanning device 30 according to the size of the radiation dose limited area of the vehicle and the traveling position of the vehicle in step S2 may further include:

After it is determined that the vehicle travels to the beam emission control time point T_{E} along the inspection passage, it is judged whether the distance L_{V} from the traveling position of the vehicle to the reference point 0 satisfies: L_{V}≤L_{B}-L_{H};

If L_{V}≤L_{B}-L_{H} is satisfied, the radiation scanning device 30 is caused to switch a working mode, so that the radiation source 31 of the radiation scanning device 30 emits a radiation beam according to the switched working mode.

Referring to Fig. 7, in addition to setting the beam emission control position point P_{E}, the position point Ca for obtaining the optical image, the position point R for trigger-blocking control and the position point PS for beam stop control may also be set. When the vehicle enters the entrance of the inspection passage, the vehicle inspection system may detect the arrival information of the vehicle, and at this time, the radiation scanning device may start a corresponding process, for example, starting high-voltage preheating, which is conductive to reducing the time delay of switching the radiation source to normal beam emission and accelerating mode switching.

When it is determined that the front edge of the vehicle head reaches the position point Cₐ, the external optical image of the vehicle may be obtained by the vision device. During this process, the type of the vehicle and the size of the radiation dose limited area in the vehicle may be obtained by processing and recognizing the external optical image, for example, a corresponding size of the cab of the truck head.

When it is determined that the front edge of the vehicle head reaches the position point R, preheating may be stopped, and the radiation source may be caused to emit the radiation beam in a low-dose working mode, so as to meet the requirements of detecting the cab without exceeding a safe dose. The low-dose working mode may be realized by controlling the emission energy of the radiation source or by a shielding structure that may shield the energy.

Referring to Fig. 8, when it is determined that the front edge of the vehicle head reaches the beam emission control position point P_{E}, it is judged whether the distance L_{V} from the traveling position of the vehicle to the reference point O satisfies L_{V}≤L_{B}-L_{H}, and if it is satisfied that L_{V}≤L_{B}-L_{H}, the radiation scanning device is caused to switch a working mode, so that the radiation source of the radiation scanning device emits a radiation beam according to the switched working mode. Here, the switched working mode may be a normal dose scanning mode for vehicle container scanning. At this time, the beam intensity received by the vehicle is greater than that of the previous mode.

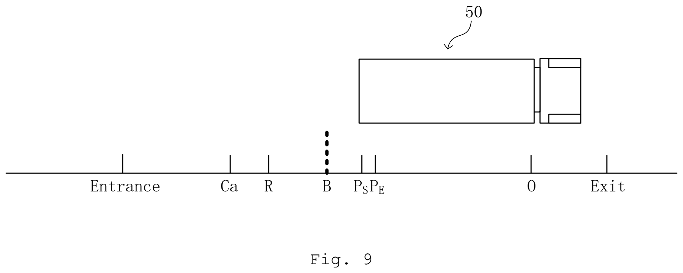

Referring to Fig. 9, in the switched working mode, the vehicle continues to travel along the inspection passage. When the rear edge of the vehicle reaches the position point PS for beam stop control, a working mode may be switched, for example, the radiation source is caused to stop emitting a radiation beam. The vehicle continues to travel until it leaves the exit of the inspection passage.

In some embodiments, the radiation inspection device includes a single radiation source 31 that is capable emitting a single radiation beam or a plurality of radiation beams or a plurality of radiation sources 31 that is capable of emitting a plurality of radiation beams respectively. Taking a plurality of radiation sources 31 as an example, at least part of the plurality of radiation sources 31 may be arranged at intervals along the extension direction of the inspection passage. Thus, a plurality of beam positions B of the radiation scanning device 30 may be formed. The plurality of beam positions B may also be arranged at intervals along the extension direction of the inspection passage. Accordingly, the beam emission control position point P_{E}, the beam emission control time point T_{E}, the position point R for trigger-blocking control and the position point P_{S} for beam stop control in the aforementioned embodiments may all be set to plural accordingly.

Referring to Figs. 2 to 4 and the aforementioned embodiments of the vehicle inspection method, the embodiment of the present disclosure provides a vehicle inspection system for performing radiation inspection on a vehicle passing through an inspection passage. The vehicle inspection system includes: a vision device 20, a radiation scanning device 30 and a control device 40.

The vision device 20 is configured to obtain an external optical image of the vehicle that has entered the inspection passage. Referring to Fig. 3, in some embodiments, the vision device 20 includes a first camera 21. The first camera 21 is located in the inspection passage. For example, the first camera 21 may be arranged on the protective wall on the left or right side of the inspection passage. The first camera 21 is configured to capture a lateral optical image of the vehicle entering the inspection passage, so that the characteristics of the type of the vehicle and the size of the radiation dose limited area of the vehicle may be very clearly acquired from the lateral optical image of the vehicle.

Referring to Fig. 4, in some embodiments, the vision device 20 further includes a second camera 22. The second camera 22 is arranged on the radiation inspection device and configured to capture an overhead optical image of the vehicle entering the inspection passage. The overhead optical image of the vehicle may assist the lateral optical image of the vehicle to determine the relevant characteristics of the vehicle. Here, the first camera 21 or the second camera 22 includes an area scan camera.

The radiation scanning device 30 which has a radiation source 31 and a detector 32, is configured to scan a vehicle passing through an inspection area in the inspection passage through radiation emitted by the radiation source 31, and obtain an inspection result through a detection signal received by the detector 32. Referring to Fig. 4, in some embodiments, the radiation scanning device 30 may further include a vehicle body 33 of a vehicle-mounted device or a traveling device, and a cross arm 34 and a vertical arm 35 arranged on the vehicle body 33. The second camera 22 may be arranged on the cross arm 34, and the detector 32 may be a detector array or a plurality of detector modules, and is arranged on the vertical arm 35 or the cross arm 34. The radiation beam F emitted by the radiation source 31 may cover the vehicle 50 passing through the scanning passage.

In some embodiments, the radiation inspection device includes a single radiation source 31 that is capable of emitting a single radiation beam or a plurality of radiation beams, or a plurality of radiation sources 31 that is capable of emit a plurality of radiation beams respectively.

The control device 40 is signally connected with both the vision device 20 and the radiation scanning device 30, and configured to perform the vehicle inspection method according to any one of the aforementioned embodiments. The control device 40 may be implemented or executed by using a general processor, a digital signal processor (DSP), an application specific integrated circuit (ASIC), a field programmable gate array (FPGA) or other programmable logic devices, discrete gate or transistor logics, discrete hardware components, or any combination thereof designed to perform the functions described herein. The general-purpose processor may be a microprocessor, but in an alternative solution, the processor may be any conventional processor, controller, microcontroller, or state machine. The processor may also be implemented as a combination of computing devices, for example, a combination of DSP and a microprocessor, a plurality of microprocessors, one or more microprocessors in core collaboration with DSP, or any other such configuration.

Referring to Figs. 2 and 3, in some embodiments, the vehicle position obtaining device 10 is configured to obtain a traveling position of the vehicle that has entered the inspection passage. In some embodiments, the vehicle position obtaining device 10 may include an area laser sensor, a light curtain or a photoelectric sensor. In other embodiments, the function of obtaining a traveling position of the vehicle by the vehicle position obtaining device 10 may also be integrated into the control device 40, for example, calculating the vehicle speed according to the capturing opportunity of the vision device 20 and the displacement of the vehicle, or obtaining the vehicle speed by other methods (for example, the speed sensor measures the speed of the vehicle or receives the vehicle speed signal provided by the vehicle), and calculating the traveling position of the vehicle according to the vehicle speed combined with the vehicle traveling time.

In one aspect of the present disclosure, a computer-readable storage medium is provided. The computer-readable storage medium has computer program instructions stored thereon that, when executed by a processor, implement the steps of the vehicle inspection method according to any one of the aforementioned embodiments.

In one or more exemplary embodiments, the described functions may be implemented in hardware, software, firmware, or any combination thereof. If implemented as a computer program product in software, each function may be stored on or transmitted by a computer-readable medium as one or more instructions or codes. The computer-readable medium includes both a computer storage medium and a communication medium, including any medium that facilitates the transfer of a computer program from one place to another. The storage medium may be any available medium that may be accessed by a computer. By way of example and not limitation, such computer-readable medium may include RAM, ROM, EEPROM, CD-ROM or other optical disk storage, magnetic disk storage or other magnetic storage devices, or any other medium that may be used to carry or store desired program codes in the form of instructions or data structures and that may be accessed by a computer. Any connection is also properly referred to as a computer-readable medium. For example, if the software is transmitted from a web site, a server, or other remote sources using a coaxial cable, an optical fiber cable, a twisted pair cable, a digital subscriber line (DSL), or wireless technologies such as infrared, radio, and microwave, then the coaxial cable, the optical fiber cable, the twisted pair cable, DSL, or wireless technologies such as infrared, radio, and microwave are included in the definition of the medium. As used herein, the disk and the disc include a compact disc (CD), a laser disc, an optical disc, a digital versatile disc (DVD), a floppy disc and a Blu-ray disc, wherein the disk usually reproduces data magnetically, while the disc reproduces data optically with laser. A combination of the above-described should also be included within the scope of a computer-readable medium.

Hereto, various embodiments of the present disclosure have been described in detail. In order to avoid obscuring the concept of the present disclosure, some details commonly known in the art have not been described. From the above descriptions, those skilled in the art may fully understand how to implement the technical solutions disclosed here.

Although some specific embodiments of the present disclosure have been described in detail by way of examples, those skilled in the art should understand that the above examples are only for an illustrative purpose, rather than limiting the scope of the present disclosure. Those skilled in the art should appreciate that modifications to the above embodiments may be made or some technical features may be replaced by equivalents without departing from the scope and spirit of the present disclosure. The scope of the present disclosure is defined by the appended claims.

## Claims

1. A vehicle inspection method for performing radiation inspection on a vehicle passing through an inspection passage by a radiation scanning device (30), comprising:
recognizing an external optical image of the vehicle that has entered the inspection passage to determine a type of the vehicle and a size of a radiation dose limited area of the vehicle;
selecting a scanning strategy of the radiation scanning device (30) for the vehicle according to the type of the vehicle, and switching a working mode of the radiation scanning device (30) according to the size of the radiation dose limited area of the vehicle and a traveling position of the vehicle.

2. The vehicle inspection method according to claim 1, further comprising:
capturing the vehicle that has entered the inspection passage by a vision device (20);
performing image processing on the captured optical image to obtain an external optical image of the vehicle for image recognition.

3. The vehicle inspection method according to claim 2, wherein the step of performing image processing on the captured optical image comprises:
performing barrel distortion correction on the captured optical image.

4. The vehicle inspection method according to claim 2, wherein the step of performing image processing on the captured optical image comprises:
stitching a plurality of optical images captured when the vehicle is at different traveling positions.

5. The vehicle inspection method according to any one of claims 1 to 4, further comprising:
obtaining the traveling position of the vehicle that has entered the inspection passage in real time by a vehicle position obtaining device (10).

6. The vehicle inspection method according to claim 5, further comprising:
causing the vision device (20) to capture the vehicle when it is determined that the vehicle travels to a preset optical image obtaining position.

7. The vehicle inspection method according to any one of claims 1 to 6, wherein the radiation dose limited area of the vehicle comprises: at least one of a truck head and a cab window of the truck head.

8. The vehicle inspection method according to any one of claims 1 to 7, wherein the size of the radiation dose limited area of the vehicle comprises a length L_{T} of a cab window of a truck head in an extension direction of the inspection passage;
the step of switching a working mode of the radiation scanning device (30) according to the size of the radiation dose limited area of the vehicle and a traveling position of the vehicle comprises:
determining a distance L_{B} from a beam position B of the radiation scanning device (30) to a reference point 0 according to the reference point 0 preset on the inspection passage;
setting a beam emission control position point P_{E} of the inspection passage so that a distance L_{E} from the beam emission control position point P_{E} to the reference point O satisfies: L_{E}≥L_{B}-(L_{T}+Lₚᵣ), where Lₚᵣ is a protection avoidance length, and Lₚᵣ satisfies: Lₚᵣ≥0;
after it is determined that the vehicle travels to the beam emission control position point P_{E}, causing the radiation scanning device (30) to switch a working mode so that a radiation source (31) of the radiation scanning device (30) emits a radiation beam according to the switched working mode.

9. The vehicle inspection method according to claim 8, wherein the size of the radiation dose limited area of the vehicle further comprises a length L_{H} of the truck head in the extension direction of the inspection passage; the step of switching a working mode of the radiation scanning device (30) according to the size of the radiation dose limited area of the vehicle and a traveling position of the vehicle further comprises:
judging whether a distance L_{V} from the traveling position of the vehicle to the reference point O satisfies: L_{V}≤L_{B}-L_{H} when it is determined that the vehicle travels to the beam emission control position point P_{E};
if L_{V}≤L_{B}-L_{H} is satisfied, causing the radiation scanning device (30) to switch a working mode, so that the radiation source (31) of the radiation scanning device (30) emits a radiation beam according to the switched working mode.

10. The vehicle inspection method according to any one of claims 1 to 7, wherein the size of the radiation dose limited area of the vehicle comprises a length L_{T} of a cab window of a truck head in an extension direction of the inspection passage;
the step of switching a working mode of the radiation scanning device (30) according to the size of the radiation dose limited area of the vehicle and a traveling position of the vehicle comprises:
recording a current speed V of the vehicle when it is determined that the vehicle travels to a beam position B of the radiation scanning device (30);
setting an beam emission control time point T_{E} of the inspection passage, so that the beam emission control time point T_{E} satisfies: T_{E}≥T_{B}+(L_{T}+Lₚᵣ)/V, where T_{B} is the time when the vehicle travels to the beam position B, Lₚᵣ is a protection avoidance length, and Lₚᵣ satisfies: Lₚᵣ≥0;
after it is determined that the vehicle travels to the beam emission control time point T_{E} along the inspection passage, causing the radiation scanning device (30) to switch a working mode, so that a radiation source (31) of the radiation scanning device (30) emits a radiation beam according to the switched working mode.

11. The vehicle inspection method according to claim 10, wherein the size of the radiation dose limited area of the vehicle further comprises a length L_{H} of the truck head in the extension direction of the inspection passage; the step of switching a working mode of the radiation scanning device (30) according to the size of the radiation dose limited area of the vehicle and the traveling position of the vehicle further comprises:
after determining that the vehicle travels to the beam emission control time point T_{E} along the inspection passage, judging whether the distance L_{V} from the traveling position of the vehicle to the reference point O satisfies: L_{V}≤L_{B}-L_{H};
if L_{V}≤L_{B}-L_{H} is satisfied, causing the radiation scanning device (30) to switch a working mode, so that a radiation source (31) of the radiation scanning device (30) emits a radiation beam according to the switched working mode.

12. A vehicle inspection system for performing radiation inspection on a vehicle passing through an inspection passage, comprising:
a vision device (20) configured to obtain an external optical image of the vehicle that has entered the inspection passage;
a radiation scanning device (30) having a radiation source (31) and a detector (32), configured to scan a vehicle passing through an inspection area in the inspection passage through radiation emitted by the radiation source (31) and obtain an inspection result through a detection signal received by the detector (32);
a control device (40) signally connected with both the vision device (20) and the radiation scanning device (30), and configured to perform the vehicle inspection method according to any one of claims 1 to 11.

13. The vehicle inspection system according to claim 12**,** wherein the vision device (20) comprises:
a first camera (21) located in the inspection passage and configured to capture a lateral optical image of the vehicle entering the inspection passage.

14. The vehicle inspection system according to claim 13, wherein the vision device further comprises:
a second camera (22) arranged on the radiation inspection device and configured to capture an overhead optical image of the vehicle entering the inspection passage.

15. The vehicle inspection system according to claim 14, wherein the first camera (21) or the second camera (22) comprises an area scan camera.

16. The vehicle inspection system according to any one of claims 12 to 15, further comprising:
a vehicle position obtaining device (10) signally connected with the control device (40) and configured to obtain a traveling position of the vehicle that has entered the inspection passage.

17. The vehicle inspection system according to claim 16, wherein the vehicle position obtaining device (10) comprises: an area laser sensor, a light curtain or a photoelectric sensor.

18. The vehicle inspection system according to any one of claims 12 to 17, wherein the radiation inspection device comprises a single radiation source (31) that is capable of emitting a single radiation beam or a plurality of radiation beams, or a plurality of radiation sources (31) that is capable of emit a plurality of radiation beams respectively.

19. A computer-readable storage medium having computer program instructions stored thereon that, when executed by a processor, realize the steps of the vehicle inspection method according to any one of claims 1 to 11.
